# EUROPEAN PATENT APPLICATION

(11) **EP 4 838 651 A1**
(43) Date of publication of application: **11.11.2026**
(21) Application number: 25837752.2
(22) Date of filing: 09.07.2025
(51) Int. Cl.: H01M 50/169, H01M 50/538, H01M 50/152, H01M 50/179, H01M 50/559, H01M 50/213

(54) **BATTERY CELL, AND BATTERY PACK AND VEHICLE INCLUDING SAME**

(30) Priority: 10.07.2024 KR 20240091321; 24.06.2025 KR 20250083248
(71) Applicant: LG Energy Solution, Ltd., Seoul 07335 (KR)
(72) Inventor: KIM, Sung-Hwan, Daejeon 34122 (KR); KIM, Do-Gyun, Daejeon 34122 (KR); MOON, Ji-Wook, Daejeon 34122 (KR); JEON, Myeong-Jun, Daejeon 34122 (KR); CHUNG, Gu-Jin, Daejeon 34122 (KR); JO, Min-Ki, Daejeon 34122 (KR)
(74) Representative: Goddar, Heinz J.
(86) International application number: PCT/KR2025/009971
(87) International publication number: WO 2026/014923

(57) **Abstract**

A battery cell according to the present disclosure may include: an electrode assembly configured with a first electrode, a second electrode, and a separator interposed therebetween, which are wound around a winding axis; a can housing having an open end through which the electrode assembly is inserted therein; a cell terminal electrically connected to the first electrode and provided on a closed portion of the can housing opposite the open end; an electrode current collector electrically connected to the second electrode and configured to contact an inner surface of the open end; and a can lid coupled to the open end to seal the can housing, wherein the can lid may include a lateral lid portion forming its outer perimeter, and wherein the lateral lid portion may be fitted into the inner surface of the open end with the end portion of the electrode current collector, which forms an outermost edge of the electrode current collector, interposed therebetween.

## Description

### TECHNICAL FIELD

The present disclosure relates to a battery cell, and a battery pack and vehicle including the same and, more specifically, to a battery cell having an improved assembly structure between a can housing and a can lid, and a battery pack and vehicle including the same.

This application is based on and claims priority from Korean Patent Application No. 10-2024-0091321, filed on July 10, 2024, and Korean Patent Application No. 10-2025-0083248, filed on June 24, 2025, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources.

Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. The operating voltage of this unit battery is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. The number of battery cells included in the battery pack and electrical connections thereof may be configured in various ways depending on the required output voltage or charge/discharge capacity.

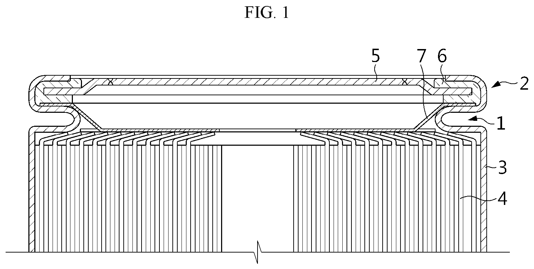

Meanwhile, secondary batteries may be classified into cylindrical, prismatic, and pouch-type battery cells depending on their shapes. Among them, as shown in FIG. 1, a conventional cylindrical battery cell includes a beading portion 1 and a crimping portion 2. The beading portion 1 may be configured to be pressed inward in the area between an opening formed on one side of a can housing 3 and an accommodation portion configured to accommodate an electrode assembly 4. In addition, the crimping portion 2 is configured to extend and bend to surround the edge of a battery cap 5 positioned on the beading portion 1. The crimping portion 2 may also fix a sealing gasket 6 as well as the battery cap 5. The cylindrical battery cell having the beading portion 1 and the crimping portion 2 has the advantages of easily securing the negative electrode current collector 7 and ensuring excellent airtightness between the can housing 3 and the battery cap 5.

However, forming the beading portion 1 and the crimping portion 2 requires a precision process, which is not a simple process. This may lead to frequent product defects during the beading or crimping process, which may reduce production yield. Furthermore, it has been pointed out that the cylindrical battery cell having the beading portion 1 and the crimping portion 2 is disadvantageous in terms of energy density. Therefore, it is necessary to improve the sealing structure by removing the beading portion 1 and the crimping portion 2 from the can housing 5 and simplifying the sealing structure.

### DISCLOSURE

### Technical Problem

The present disclosure is designed to solve the problems of the related art, and therefore the present disclosure is directed to providing a cylindrical battery cell with a high energy density and an improved and simplified assembly structure between a can housing and a can lid by excluding a beading portion or a crimping portion.

In addition, the present disclosure is also directed to providing a cylindrical battery cell in which a can lid and an electrode current collector can be integrally secured to the can housing when assembling the can housing and the can lid.

Furthermore, the present disclosure is also directed to preventing changes in the outer diameter of the can housing when assembling the can housing and the can lid.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell including: an electrode assembly configured with a first electrode, a second electrode, and a separator interposed therebetween, which are wound around a winding axis; a can housing having an open end through which the electrode assembly is inserted therein; a cell terminal electrically connected to the first electrode and provided on a closed portion of the can housing opposite the open end; an electrode current collector electrically connected to the second electrode and configured to contact an inner surface of the open end; and a can lid coupled to the open end to seal the can housing, wherein the can lid may include a lateral lid portion forming its outer perimeter, and wherein the lateral lid portion may be fitted into the inner surface of the open end with the end portion of the electrode current collector, which forms an outermost edge of the electrode current collector, interposed therebetween.

The open end may be configured to have an inclined portion on the inner surface of the open end such that its thickness gradually decreases toward its end.

The end portion of the electrode current collector may be press-fitted between the lateral lid portion and the inclined portion.

The end portion of the electrode current collector may extend in a height direction so as to be positioned at a height corresponding to the inclined portion.

The lateral lid portion may include: a first lateral lid portion inclined parallel to the inclined portion; and a second lateral lid portion disposed to overlap an end of the open end in a height direction.

The first lateral lid portion may be forcibly fitted into the inclined portion of the open end with the end portion of the electrode current collector interposed therebetween, and the second lateral lid portion may be provided such that its horizontal surface contacts the end of the open end and its vertical surface is parallel to an outer surface of the open end.

The end portion of the electrode current collector may be press-fixed between the first lateral lid portion and the inclined portion.

The second lateral lid portion and the end of the open end may be welded from a side along a circumferential direction of the can housing.

The battery cell may further include a welding target portion formed to be recessed inward from an outside of the can housing at a location where the second lateral lid portion and the open end vertically contact each other, and a weld bead may be formed in the welding target portion.

The welding target portion may be configured in a chamfered form in at least one of an outer corner area of the second lateral lid portion and an outer corner area of the open end, which face each other.

The welding target portion may be continuously formed along a circumferential direction of the can housing.

The weld bead may be formed by thermally melting the second lateral lid portion, the open end, and the end portion of the electrode current collector.

The electrode current collector may include: a disc portion seated on a winding surface of the electrode assembly and welded to the second electrode; a bent portion bent from an edge of the disc portion so as to contact the inner surface of the open end; and an end portion of the electrode current collector forming an outermost edge and press-fitted between the lateral lid portion and the inner surface of the open end.

According to another aspect of the present disclosure, there is provided a battery pack including a battery cell described above.

According to another aspect of the present disclosure, there is provided a vehicle including the battery pack.

### Advantageous Effects

According to the present disclosure, it is possible to provide a cylindrical battery cell with a high energy density and an improved and simplified assembly structure between the can housing and the can lid by excluding a beading portion or a crimping portion.

In addition, according to the present disclosure, it is possible to integrally secure the can lid and the electrode current collector to the can housing when assembling the can housing and the can lid.

In addition, according to the present disclosure, it is possible to prevent changes in the outer diameter of the can housing when assembling the can housing and the can lid.

Furthermore, according to the present disclosure, the contact, fixation, and assemblability among the can housing, the can lid, and the electrode current collector can be improved.

The effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a partially cross-sectional view schematically illustrating a conventional cylindrical battery cell.
FIG. 2 is a schematic perspective view of a cylindrical battery cell according to an embodiment of the present disclosure.
FIG. 3 is a schematic cross-sectional view of a cylindrical battery cell according to an embodiment of the present disclosure.
FIG. 4 is an enlarged view of a closed portion of a can housing according to an embodiment of the present disclosure.
FIG. 5 is an exploded perspective view of a cylindrical battery cell according to an embodiment of the present disclosure.
FIG. 6 is a drawing illustrating a can housing including an electrode assembly and a can lid, which are separated from each other, according to an embodiment of the present disclosure.
FIG. 7 is an enlarged view of a part in FIG. 6.
FIG. 8 is a drawing illustrating an example in which the can lid and the electrode current collector in FIG. 6 are fitted into an open end of the can housing.
FIG. 9 is a drawing illustrating an example of side welding between a can housing and a can lid according to an embodiment of the present disclosure.
FIG. 10 is a partially cross-sectional view of a can housing and a can lid to which a welding target portion is applied according to another embodiment of the present disclosure.
FIG. 11 is a drawing illustrating an example of a triple-welded can housing, can lid, and electrode current collector according to another embodiment of the present disclosure.
FIG. 12 is a drawing schematically illustrating a battery pack including a battery cell according to an embodiment of the present disclosure.
FIG. 13 is a drawing schematically illustrating a vehicle including the battery pack in FIG. 12.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure. Throughout the specification, unless otherwise stated, respective elements may include a single or a plurality of elements.

For convenience of explanation, the longitudinal direction of a winding axis of an electrode assembly 100 wound in the form of a jelly-roll in this specification will be referred to as an axial direction. In addition, the direction surrounding the winding axis will be referred to as a circumferential direction. In addition, the direction approaching or moving away from the winding axis will be referred to as a radial direction. Among these, the direction approaching the winding axis will be referred to as a centripetal direction, and the direction moving away from the winding axis will be referred to as a centrifugal direction.

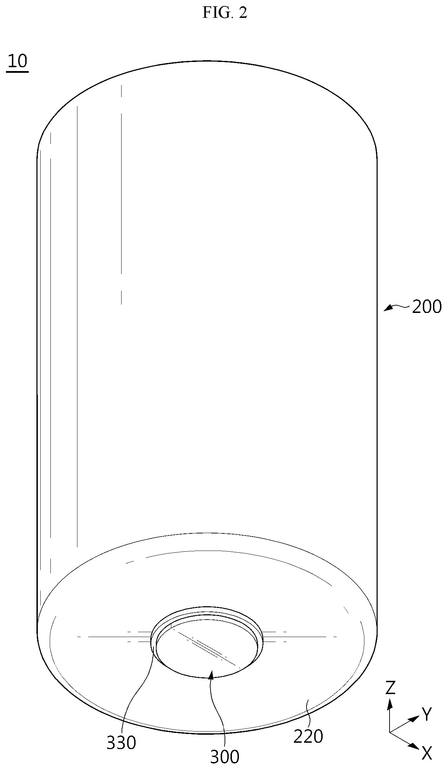

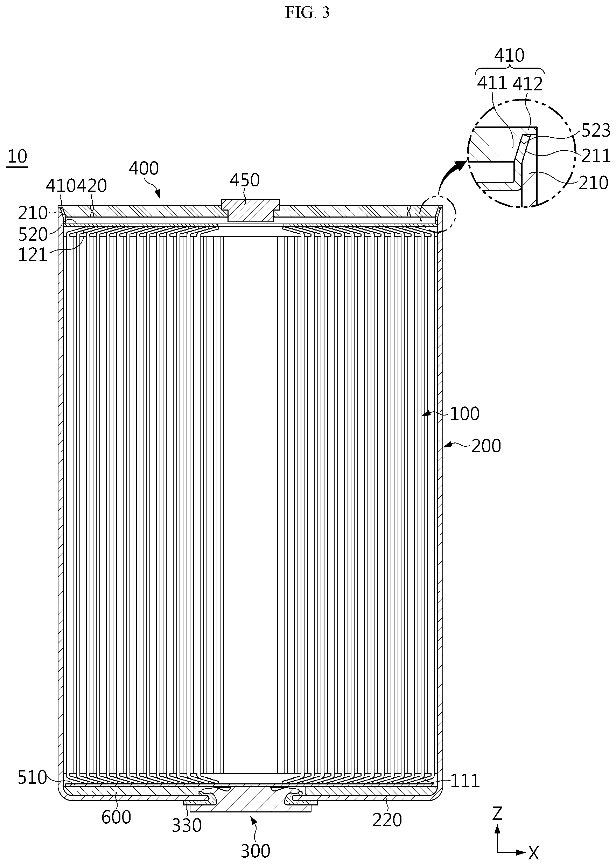

FIG. 2 is a schematic perspective view of a cylindrical battery cell according to an embodiment of the present disclosure, and FIG. 3 is a schematic cross-sectional view of a cylindrical battery cell according to an embodiment of the present disclosure.

Referring to FIGS. 2 and 3, a battery cell 10 according to an embodiment of the present disclosure includes an electrode assembly 100, a can housing 200, a cell terminal 300, an electrode current collector, and a can lid 400.

The electrode assembly 100 has a structure in which a first electrode, a second electrode, and a separator interposed therebetween are wound around a winding axis, thereby defining a core and an outer circumferential surface. The electrode assembly 100 may be a jelly-roll-type electrode assembly 100. An additional separator may be provided on the outer circumferential surface of the electrode assembly 100 for insulation from the can housing 200. The electrode assembly 100 may have, without limitation, a winding structure well known in the art. The first electrode refers to an electrode having one of a positive polarity and a negative polarity, and the second electrode refers to an electrode having a polarity opposite that of the first electrode.

The first electrode includes a first electrode current collector and a first electrode active material coated on one or both surfaces of the first electrode current collector. An uncoated portion, on which the first electrode active material is not coated, is provided at one end of the first electrode in the widthwise direction (parallel to the height direction Z of the cylindrical battery cell 10 shown in FIG. 3). That is, the first electrode includes an uncoated portion, on which the active material is not coated so as to be exposed to the outside of the separator, at the longitudinal end of the first electrode along the winding direction. The uncoated portion, which functions as a first electrode tab, will be referred to as a first uncoated portion 111. The first uncoated portion 111 is provided at the bottom of the electrode assembly 100 accommodated inside the can housing 200 (in the cylindrical battery cell 10 shown in FIG. 3). That is, the first electrode includes a first uncoated portion, on which an active material layer is not coated so as to be exposed to the outside of the separator, provided at the longitudinal end, and at least a part of the first uncoated portion 111 is used as an electrode tab itself. The first uncoated portion 111 may be, for example, a positive electrode tab.

At least a portion of the first uncoated portion 111 may include a plurality of segments divided along the winding direction of the electrode assembly 100. In this case, the plurality of segments may be bent along a radial direction of the electrode assembly 100. The plurality of segments, which are bent, may overlap each other in multiple layers. An electrode current collector may be disposed below the first uncoated portion 111. For example, the first uncoated portion 111 and the electrode current collector may be connected by welding. In this case, the electrode current collector has the same positive polarity as the first uncoated portion 111, and will be referred to as a positive electrode current collector 510 hereinafter.

The second electrode includes a second electrode current collector and a second electrode active material coated on one or both surfaces of the second electrode current collector. An uncoated portion on which the second electrode active material is not applied is provided at the other end of the second electrode current collector in the widthwise direction (parallel to the Z-axis). The uncoated portion, which functions as a second electrode tab, will hereinafter be referred to as a second uncoated portion 121. The second uncoated portion 121 may be provided at the upper portion of the electrode assembly 100, which is accommodated inside the can housing 200 (in the cylindrical battery cell 10 shown in FIG. 3). That is, the second electrode current collector includes a second uncoated portion 121, on which an active material layer is not coated so as to be exposed to the outside of the separator, provided at its longitudinal end, and at least a part of the second uncoated portion 121 is used as an electrode tab itself. The second uncoated portion 121 may be, for example, a negative electrode tab.

At least a portion of the second uncoated portion 121 may include a plurality of segments divided along the winding direction of the electrode assembly 100. In this case, the plurality of segments may be bent in the radial direction of the electrode assembly 100. The plurality of segments, which are bent, may overlap each other in multiple layers. An electrode current collector may be disposed on top of the second uncoated portion 121. For example, the second uncoated portion 121 and the electrode current collector may be connected by welding. In this case, the electrode current collector has the same negative polarity as the second uncoated portion 121, and will be referred to as a negative electrode current collector 520 hereinafter.

As described above, the first uncoated portion 111 and the second uncoated portion 121 extend in opposite directions along a height direction (parallel to the Z-axis) of the cylindrical battery cell 10. The first uncoated portion 111 faces a closed portion 220 of the can housing 200, and the second uncoated portion 121 faces an opening O of the can housing 200 located opposite the closed portion 220.

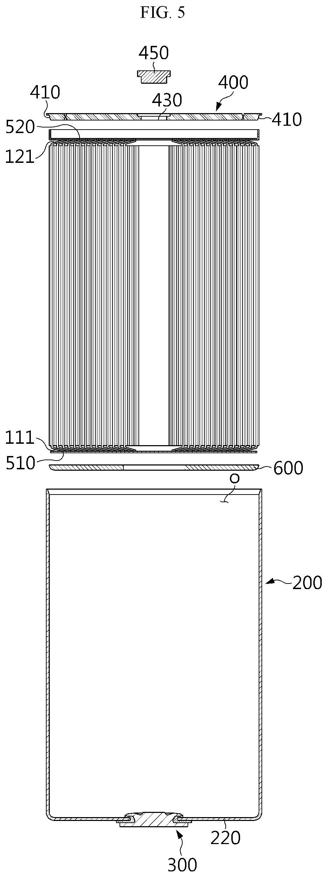

The can housing 200 is a roughly cylindrical container with an opening O formed at the top (see FIG. 5), and is made of a conductive material, such as metal. The can housing 200 may be made of, for example, steel, stainless steel, or nickel-plated steel. Hereinafter, the upper edge of the can housing 200, which forms the opening O, will be referred to as an open end 210. The lower portion of the can housing 200, located opposite the opening O, will be referred to as a closed portion 220. The side (outer circumferential surface) and the closed portion 220 of the can housing 200 may be formed integrally. The lower surface (parallel to the X-Y plane) of the can housing 200, i.e., the surface of the closed portion 220, may be configured to be substantially flat. The can housing 200 may receive the electrode assembly 100 through the opening O formed at the top.

The can housing 200 is electrically connected to the electrode assembly 100. The can housing 200 is electrically connected to, for example, the second uncoated portion 121 of the electrode assembly 100. The can housing 200 may be configured to directly contact the negative electrode current collector 520 connected to the second uncoated portion 121. In this case, the can housing 200 has the same negative polarity as the second uncoated portion 121.

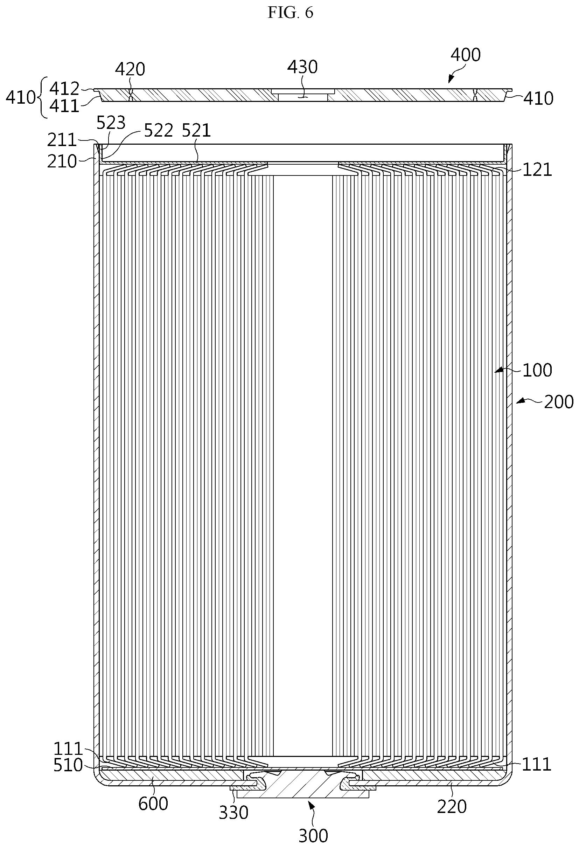

In the present embodiment, the negative electrode current collector 520, which is an electrode current collector electrically connected to the second electrode, includes a disc portion 521, a bent portion 522, and an end portion 523 corresponding to the outermost edge, as shown in FIGS. 3 and 6. The disc portion 521 may be seated on the winding surface of the electrode assembly 100 and welded to the second uncoated portion 121 of the second electrode. The bent portion 522 may be configured to be bent from the edge of the disc portion 521 and to contact the inner surface of the open end 210. In addition, the end portion 523 may be configured to be press-fixed between a lateral lid portion 410 of the can lid 400, which will be described later, and the inner surface of the open end 210 of the can housing 200. The end portion 523 of the negative electrode current collector 520 may be press-fixed to an inclined portion 211 of the open end 210, and the bent portion 522 may be welded to the inner surface of the open end 210 from below the inclined portion 211. A more detailed description of this will be provided later.

The cell terminal 300 is made of a conductive metal material. For example, aluminum (Al) may be used as the material for the cell terminal 300. In the case where the cell terminal 300 is made of aluminum, 10-series aluminum with relatively low electrical resistance may be applied to facilitate a riveting process, as described later. The cell terminal 300 is installed on the lower surface of the can housing 200, i.e., the closed portion 220 of the can housing 200. The cell terminal 300 is electrically connected to the first uncoated portion 111 of the electrode assembly 100. In this case, the cell terminal 300 has the first polarity, i.e., the positive polarity. Therefore, the cell terminal 300 may function as a positive electrode terminal in the cylindrical battery cell 10 of the present disclosure. The cell terminal 300 is electrically insulated from the can housing 200, which has the negative polarity. Electrical insulation between the cell terminal 300 and the can housing 200 may be implemented in various ways. For example, an insulator 600 may be interposed between the positive electrode current collector 510 and the closed portion 220 of the can housing 200, and an insulating gasket 330 may be interposed between the cell terminal 300 and the can housing 200 for implementing insulation.

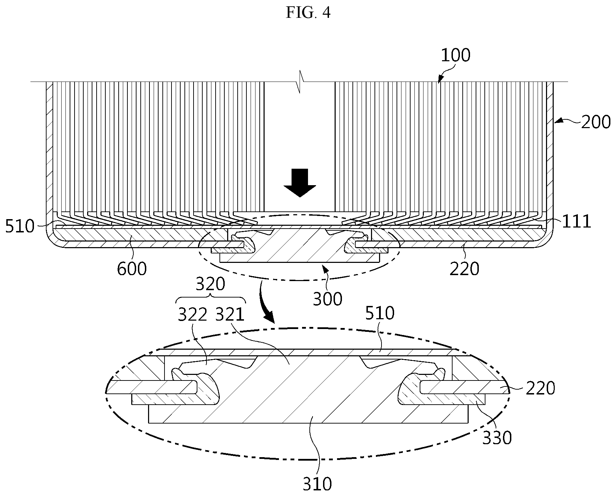

Referring to FIG. 4, the cell terminal 300 includes a terminal exposure portion 310 and a terminal insertion portion 320. The terminal insertion portion 320 may include an electrical connection portion 321 and a flange 322. The terminal exposure portion 310 is exposed to the outside of the can housing 200. The terminal exposure portion 310 may be positioned approximately at the center of the closed portion 220 of the can housing 200. The maximum width of the terminal exposure portion 310 may be configured to be greater than the maximum width of a hole formed in the can housing 200 for insertion of the cell terminal 300. That is, the outer diameter of the cell terminal 300 exposed to the outside of the closed portion 220 may be larger than the inner diameter of a through-hole formed in the closed portion 220 of the can housing 200 for exposing the cell terminal 300. Accordingly, the cross-section of the through-hole formed in the closed portion 220 for exposing the cell terminal 300 may be included in the cross-section of the cell terminal 300 exposed to the outside of the closed portion 220. In addition, the portion of the cell terminal 300 exposed to the outside of the closed portion 220 may cover at least a portion of the closed portion 220 of the can housing 200 in the axial direction. The terminal insertion portion 320 may pass through approximately the center of the closed portion 220 of the can housing 200, and the electrical connection portion 321 of the terminal insertion portion 320 may be electrically connected to the first uncoated portion 111. The flange 322 of the terminal insertion portion 320 may be formed on the periphery of the electrical connection portion 321 and may be riveted onto the inner surface of the closed portion 220 of the can housing 200. That is, the flange 322 of the terminal insertion portion 320 may have a shape that is bent toward the inner surface of the closed portion 220 of the can housing 200. Accordingly, the maximum width of the terminal insertion portion 320 after a riveting process for fixing the cell terminal 300 is performed may be configured to be greater than the maximum width of the hole formed in the can housing 200 through which the terminal insertion portion 320 passes.

The electrical connection portion 321 of the terminal insertion portion 320 may be coupled to the positive electrode current collector 510. The electrical connection portion 321 of the terminal insertion portion 320 may have, for example, an approximately cylindrical shape. The shape of the electrical connection portion 321 of the terminal insertion portion 320 is not limited thereto. The electrical connection portion 321 of the terminal insertion portion 320 may have various shapes, such as a cylindrical shape having an oval cross-section, a square prism shape, a hexagonal prism shape, or an octagonal prism shape. The bottom surface of the electrical connection portion 321 of the terminal insertion portion 320 may be substantially formed to be at least partially flat.

The connection between the bottom surface of the central area of the terminal insertion portion 320 and the positive electrode current collector 510 may be achieved by, for example, laser welding, spot welding, or ultrasonic welding.

The welding may be performed by irradiating a laser beam through a hole formed in the winding center of the electrode assembly 100 or by inserting a tool for ultrasonic welding or spot welding to form a weld bead on one surface (the surface facing the hole formed in the winding center of the electrode assembly 100) of the positive electrode current collector 510. A guide pipe (not shown) for welding may be inserted into the hole formed in the winding center. In a case where welding is performed with the guide pipe inserted, the risk of damage to the separator forming the inner wall of the hole formed in the winding center may be reduced.

The can lid 400 is configured to seal the opening O of the can housing 200. The can lid 400 may be configured in a disc shape capable of covering the opening O to be force-fitted into the open end 210 of the can housing 200.

The can lid 400 according to the present embodiment may include a vent notch 420 configured to rupture when the pressure inside the can housing 200 exceeds a threshold. For example, the vent notch 420 may be formed on both sides of the can lid 400 and may be formed in at least one of a continuous circular pattern, a discontinuous circular pattern, and a linear pattern on the surface of the can lid 400. In addition, the vent notch 420 may be formed in various other patterns.

Referring to FIG. 5, the can lid 400 may include an electrolyte injection hole 430 at the center. The electrolyte injection hole 430 may be configured to face a hollow space formed at the center of the core of the electrode assembly 100. The negative electrode current collector 520 may have a center hole at its center, which faces the electrolyte injection hole 430.

For example, after the can lid 400 is coupled to the open end 210 of the can housing 200, the electrolyte may be injected into the interior of the can housing 200 through the electrolyte injection hole 430 and the center hole. The electrolyte injection hole 430 may be closed after the electrolyte injection is completed. The electrolyte injection hole 430 may be sealed with a lid hole cap 450 provided in the form of a metal disc. As an alternative to the present embodiment, a ball (not shown) may be press-inserted into the electrolyte injection hole 430 to seal the same. In this case, welding may be performed or an adhesive may be applied to the contact interface between the ball and the electrolyte injection hole 430. Unlike the present embodiment, the electrolyte injection process may also be performed by drilling a hole in the cell terminal 300 provided in the closed portion 220 of the can housing 200, injecting the electrolyte, and then closing the hole. In this case, the can lid 400 may exclude the lid hole cap 450 and the electrolyte injection hole 430.

The can lid 400 may include a lateral lid portion 410 forming its outer perimeter, and the lateral lid portion 410 may be configured to be fitted into the inner surface of the open end 210 of the can housing 200 with a portion of the negative electrode current collector 520 interposed therebetween. Preferably, as shown in FIGS. 6 to 8, the lateral lid portion 410 of the can lid 400 may be configured to be fitted to the inner surface of the open end 210 of the can housing 200 with the end portion 523 of the negative electrode current collector 520 interposed therebetween.

In the present embodiment, the open end 210 of the can housing 200 has an inclined portion 211 on its inner surface, the inclined portion having a thickness that gradually decreases toward the end. The angle of the inclined portion 211 may be approximately 15° to 25°, and the length of the inclined portion 211 may be 0.2mm to 2mm. The open end 210 has a shape that tapers in the height direction. In addition, the open end 210 has an inclined portion 211 on its inner surface, and its outer surface extends straight in the height direction. Therefore, the can housing 200 does not have a change in diameter in the height direction when viewed from the outside.

The inclined portion 211 provided on the inner surface of the open end 210 serves to guide the force-fit of the can lid 400 into the can housing 200. That is, when assembling the can lid 400 to the can housing 200, the inclined portion 211 of the open end 210 may guide the insertion of the can lid 400, thereby increasing the assembly convenience and airtightness between the open end 210 of the can housing 200 and the lateral lid portion 410 of the can lid 400, and reducing alignment errors.

The lateral lid portion 410 of the can lid 400 may include a first lateral lid portion 411 that is inclined parallel to the inclined portion 211 of the open end 210, and a second lateral lid portion 412 that overlaps the end 213 of the open end 210 in the height direction.

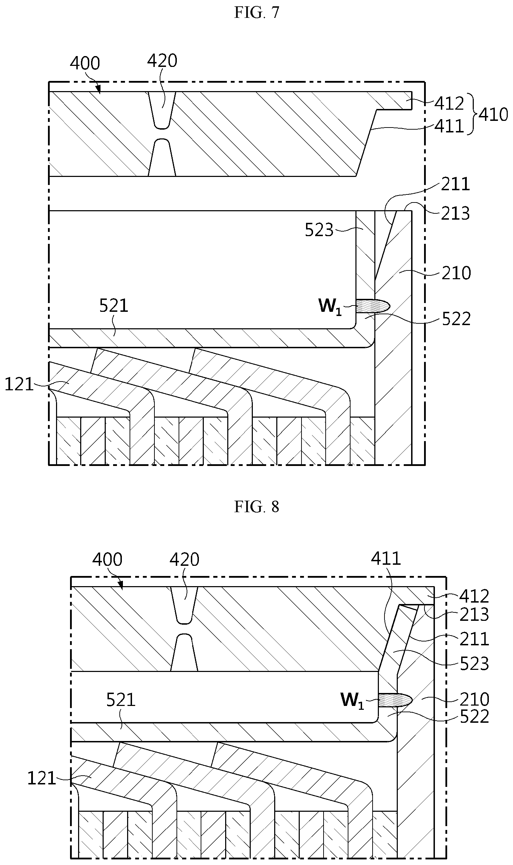

In addition, the negative electrode current collector 520 may be disposed so that its end is positioned at a height corresponding to the inclined portion 211 of the open end 210. That is, the negative electrode current collector 520 may be disposed so that its end is positioned at a height corresponding to any point from the starting point to the end point of the inclined portion 211. For example, as shown in FIG. 7, when the end portion 523 of the negative electrode current collector 520 may be configured to extend in the vertical direction so that the end of the negative electrode current collector 520 is positioned on the same plane as the end 213 of the open end 210.

According to the configuration of the can housing 200, can lid 400, and negative electrode current collector 520, when the can lid 400 is fitted into the open end 210 of the can housing 200, the end portion 523 of the negative electrode current collector 520 may be pressed by the first lateral lid portion 411 of the can lid 400 to be bent toward the inclined portion 211 of the open end 210. That is, the first lateral lid portion 411 of the can lid 400 may be forcibly fitted into the inclined portion 211 of the open end 210 while pressing the negative electrode current collector 520 toward the inclined portion 211. In this case, the end portion 523 of the negative electrode current collector 520 may be pressed by the first lateral lid portion 411 of the can lid 400 and the inclined portion 211 of the open end 210 to be fixed. Therefore, welding between the negative electrode current collector 520 and the can housing 200 may be omitted. The negative electrode current collector 520 is electrically connected to the can lid 400 and the can housing 200.

In addition, the second lateral lid portion 412 of the can lid 400 may be seated on the end 213, i.e., the upper end, of the open end 210. The second lateral lid portion 412 is provided such that its horizontal surface contacts the end 213 of the open end 210 and its vertical surface is parallel to the outer surface of the open end 210.

When the second lateral lid portion 412 is seated on the end 213 of the open end 210, the first lateral lid portion 411 is no longer inserted beneath the inclined portion 211 inside the can housing 200. As described above, by ensuring that the second lateral lid portion 412 is seated on the upper end of the open end 210 and limiting the insertion depth of the can lid 400, the first lateral lid portion 411 is not forcibly fitted beneath the inclined portion 412, so that the pressure resulting from the force-fitting of the can lid 400 does not excessively apply to the inner wall of the can housing 200. Therefore, it is possible to prevent changes in the outer diameter of the can housing 200 due to over- or incorrect assembly of the can lid 400.

Referring to FIGS. 7 and 8, the bent portion 522 of the negative electrode current collector 520, which is not interposed between the first lateral lid portion 411 and the inclined portion 211, may be welded (see W₁) to the inner surface of the open end 210. For example, before inserting the can lid 400 into the can housing 200, the bent portion 522 of the negative electrode current collector 520 and the inner surface of the open end 210 are welded to each other. In this case, the lower part of the end portion 523 of the negative electrode current collector 520 may be fixed. Then, when the end portion 523 of the negative electrode current collector 520 is pressed by the first lateral lid portion 411 during the process of inserting the can lid 400 into the can housing 200, the disc portion 521 of the negative electrode current collector 520 does not move at the welded and fixed point, and only the end portion 523 of the negative electrode current collector 520 may be bent. Accordingly, the force-fitting assembly among the first lateral lid portion 411 of the can lid 400, the end portion 523 of the negative electrode current collector 520, and the open end 210 of the can housing 200 may be easily performed without precise tolerance control.

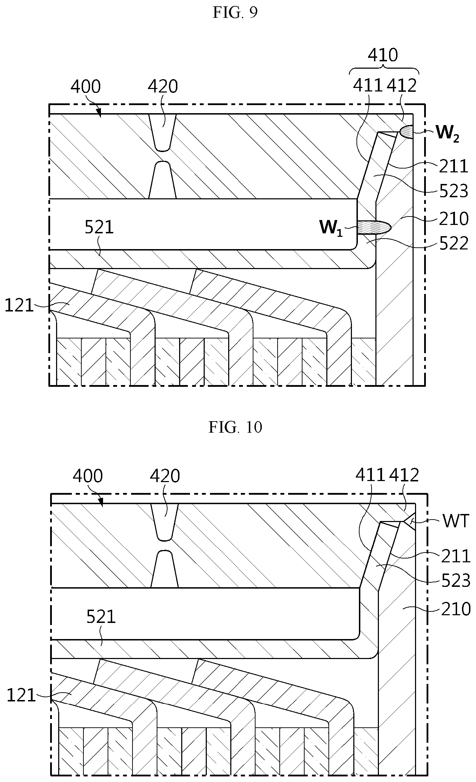

Referring to FIG. 9, the first lateral lid portion 411 is force-fitted to the inclined portion of the open end 210 with the end portion 523 of the negative electrode current collector 520 interposed therebetween, and then the second lateral lid portion 412 and the end of the open end 210 are welded (see W₂) from the side.

Laser welding may be performed at the contact interface between the second lateral lid portion 412 and the end of the open end 210. The second lateral lid portion 412 and the end 213 of the open end 210 may be welded (W₂) from the side along the circumferential direction of the can housing 200. That is, the battery cell 10 according to the present embodiment is configured such that the second lateral lid portion 412 of the can lid 400 is seated on the end 213 of the open end 210. Therefore, the can lid 400 and the can housing 200 may be fixed to each other by lateral welding (W₂). The contact interface between the second lateral lid portion 412 and the end 213 of the open end 210 may be a welding target, and welding may be continuously performed along the circumferential direction of the cylindrical battery cell 10. According to this implemented configuration, even if the first lateral lid portion 411 of the can lid 400 is forcibly fitted into the inner surface of the open end 210, the pressure applied to the inner surface of the open end 210 may be distributed. Therefore, it is possible to suppress an increase in the outer diameter of the can housing 200 due to the force-fit of the can lid 400.

According to the battery cell 10 of the present disclosure described above, since the can lid 400 is force-fitted into the open end 210 of the can housing 200 and welded from the side along the circumferential direction of the battery cell 10, the energy density per unit volume is higher than that of the conventional battery cell 10 to which the beading portion and the crimping portion (see FIG. 1) are applied, and the assembly structure between the can housing 200 and the can lid 400 is simple.

In addition, according to the battery cell 10 of the present disclosure, the can lid 400 and the negative electrode current collector 520 may be integrally fixed to the can housing 200 during the assembly process of the can housing 200 and the can lid 400, thereby providing excellent contact, fixation, and assemblability of the can housing 200, can lid 400, and negative electrode current collector 520.

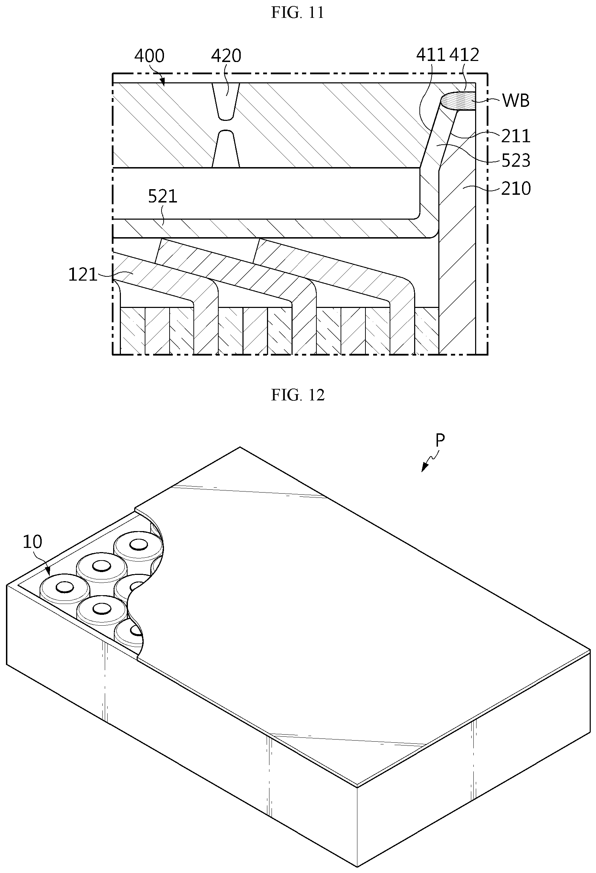

Next, battery cells according to other embodiments of the present disclosure will be described with reference to FIGS. 10 and 11.

The same reference numerals as the previous drawings indicate the same components, and redundant descriptions of the same components will be omitted, focusing on differences from the previous embodiments.

A battery cell 10 according to another embodiment of the present disclosure differs from the aforementioned embodiment in the structure of the open end 210 of the can housing 200 and the second lateral lid portion 412 of the can lid 400 where the lateral welding is performed, but the remaining configurations and structures are substantially the same.

As shown in FIG. 10, the battery cell 10 according to another embodiment of the present disclosure includes a welding target portion WT formed to be recessed inward from the outside of the can housing 200 at a position where the second lateral lid portion 412 of the can lid 400 and the open end 210 of the can housing 200 vertically contact each other. For example, the welding target portion WT may be provided in a chamfered form in at least one of the outer corner area of the second lateral lid portion 412 and the outer corner area of the open end 210, which face each other.

The welding target portion WT may be provided at a position corresponding to the contact interface between the can housing 200 and the can lid 400. The welding target portion WT may be provided continuously along the circumferential direction of the can housing 200. This welding target portion WT may function as a welding guideline that guides the welding points when welding the can housing 200 and the can lid 400.

In addition, in the configuration of the welding target portion WT according to another embodiment of the present disclosure, it is possible to prevent an increase in the outer diameter due to the weld bead WB when the contact interface between the can housing 200 and the can lid 400 is lateral-welded along the circumferential direction. For example, when the welding target portion WT is irradiated with a laser beam, the first lateral lid portion 411 and the open end 210 are locally melted and then solidified to produce a weld bead WB. In this case, as shown in FIG. 11, the inner space of the welding target portion WT may be filled with the weld bead WB. Furthermore, the weld bead WB does not protrude beyond the outer surface of the can housing 200 during lateral welding, making it easy to manage the outer diameter of the can housing 200.

In addition, the end portion 523 of the negative electrode current collector 520 is configured to be positioned at a height corresponding to the contact interface between the open end 210 and the second lateral lid portion 412. At least the end of the end portion 523 of the negative electrode current collector 520 is configured to be positioned on the same plane as the welding target portion. In this case, the negative electrode current collector 520 may be welded simultaneously when welding the can housing 200 and the can lid 400 from the side. That is, the battery cell 10 according to another embodiment of the present disclosure may include a weld bead WB formed by thermally melting the open end 210, the second lateral lid portion 412, and the end portion 523 of the negative electrode current collector 520.

Since the battery cell 10 according to another embodiment of the present disclosure includes the welding target portion WT, the depth of metal that must be melted by laser irradiation may be reduced during laser welding. Therefore, the second lateral lid portion 412, the open end 210, and the end portion 523 of the negative electrode current collector 520 may be integrally melted and joined using a relatively low laser output. In addition, if the laser focus position is not precisely aligned with the metal surface during laser welding, it is difficult to produce a uniform weld bead WB. In the case of the battery cell 10 of the present disclosure, the laser irradiation position may be accurately guided by the welding target portion WT continuously provided along the circumferential direction of the battery cell 10, which is advantageous for uniformly producing a weld bead WB.

In addition, according to the configuration of another embodiment of the present disclosure described above, the can housing 200, the can lid 400, and the negative electrode current collector 520 may be joined to each other by a single welding process. Furthermore, according to the present disclosure, the process of welding the can housing 200 and the negative electrode current collector 520 to ensure that the can housing 200 has the negative polarity, and the process of welding the can lid 400 to the can housing 200 to seal the can housing 200 may be accomplished simultaneously. Therefore, the number of assembly processes for the battery cell 10 may be reduced, thereby improving process efficiency and shortening the cycle time.

The battery cell 10 described above may be accommodated in a pack case of a battery pack P, as shown in FIG. 12. The battery pack P may be configured using a battery module, which is an intermediate assembly form, or may be configured using the battery cell 10 directly without the battery module, as shown in the drawing. As disclosed in the present embodiment, the battery pack P in which the battery cell 10 is stored directly inside the pack case of the battery pack P without a battery module may provide a higher energy density.

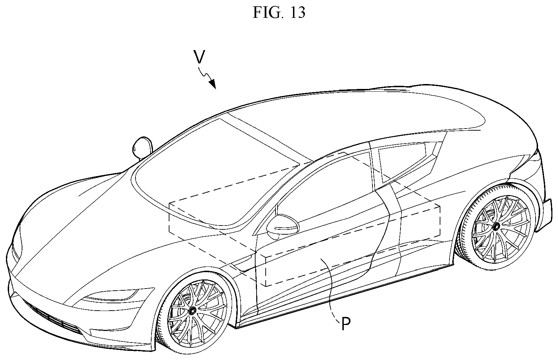

The battery pack P with such a higher energy density may store the same amount of energy while reducing its volume and weight. Therefore, when the battery pack P equipped with such a battery cell 10 is mounted to a vehicle V that uses electricity as its energy source, as shown in FIG. 13, the vehicle's mileage per unit energy may be further increased.

The vehicle V according to an embodiment of the present disclosure includes a battery pack P according to an embodiment of the present disclosure. The vehicle V may be configured to operate using power supplied from the battery pack P according to an embodiment of the present disclosure.

The previously disclosed embodiments should be considered as those intended to describe the present disclosure, instead of those intended to limit the present disclosure. Thus, the scope of the present disclosure, represented by the claims below instead of the above detailed description, should be construed as encompassing the claims and all modifications and variations derived from equivalent concepts of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. In addition, although the operational effects according to the configuration of the present disclosure have not been explicitly described in the foregoing description of the embodiments, it is apparent that predictable effects resulting from the configuration should also be recognized as within the scope of the present disclosure.

## Claims

1. A battery cell comprising:
an electrode assembly configured with a first electrode, a second electrode, and a separator interposed therebetween, which are wound around a winding axis;
a can housing having an open end through which the electrode assembly is inserted therein;
a cell terminal electrically connected to the first electrode and provided on a closed portion of the can housing opposite the open end;
an electrode current collector electrically connected to the second electrode and configured to contact an inner surface of the open end; and
a can lid coupled to the open end to seal the can housing,
wherein the can lid comprises a lateral lid portion forming its outer perimeter, and
wherein the lateral lid portion is fitted into the inner surface of the open end with the end portion of the electrode current collector, which forms an outermost edge of the electrode current collector, interposed therebetween.

2. The battery cell of claim 1,
wherein the open end is configured to have an inclined portion on the inner surface of the open end such that its thickness gradually decreases toward its end.

3. The battery cell of claim 2,
wherein the end portion of the electrode current collector is press-fitted between the lateral lid portion and the inclined portion.

4. The battery cell of claim 2,
wherein the end portion of the electrode current collector extends in a height direction so as to be positioned at a height corresponding to the inclined portion.

5. The battery cell of claim 2,
wherein the lateral lid portion comprises:
a first lateral lid portion inclined parallel to the inclined portion; and
a second lateral lid portion disposed to overlap an end of the open end in a height direction.

6. The battery cell of claim 5,
wherein the first lateral lid portion is forcibly fitted into the inclined portion of the open end with the end portion of the electrode current collector interposed therebetween, and
wherein the second lateral lid portion is provided such that its horizontal surface contacts the end of the open end and its vertical surface is parallel to an outer surface of the open end.

7. The battery cell of claim 5,
wherein the end portion of the electrode current collector is press-fixed between the first lateral lid portion and the inclined portion.

8. The battery cell of claim 5,
wherein the second lateral lid portion and the end of the open end are welded from a side along a circumferential direction of the can housing.

9. The battery cell of claim 5,
further comprising a welding target portion formed to be recessed inward from an outside of the can housing at a location where the second lateral lid portion and the open end vertically contact each other,
wherein a weld bead is formed in the welding target portion.

10. The battery cell of claim 9,
wherein the welding target portion is configured in a chamfered form in at least one of an outer corner area of the second lateral lid portion and an outer corner area of the open end, which face each other.

11. The battery cell of claim 9,
wherein the welding target portion is continuously formed along a circumferential direction of the can housing.

12. The battery cell of claim 9,
wherein the weld bead is formed by thermally melting the second lateral lid portion, the open end, and the end portion of the electrode current collector.

13. The battery cell of claim 1,
wherein the electrode current collector comprises:
a disc portion seated on a winding surface of the electrode assembly and welded to the second electrode;
a bent portion bent from an edge of the disc portion so as to contact the inner surface of the open end; and
an end portion of the electrode current collector forming an outermost edge and press-fitted between the lateral lid portion and the inner surface of the open end.

14. A battery pack comprising a battery cell according to any one of claims 1 to 13.

15. A vehicle comprising a battery pack according to claim 14.
